# EUROPEAN PATENT SPECIFICATION

(11) **EP 3 009 060 B1**
(45) Date of publication and mention of the grant of the patent: **26.04.2017**
(21) Application number: 14189336.2
(22) Date of filing: 17.10.2014
(51) Int. Cl.: A47L 11/40, A47L 13/22

(54) **Steam cleaning device**
Dampfreinigungsvorrichtung
Dispositif de nettoyage à la vapeur

(43) Date of publication of application: 20.04.2016
(73) Proprietor: Black & Decker Inc., Newark, Delaware 19711 (US)
(72) Inventor: Rowntree, David, Newton Hall, Durham DH1 5NF (GB); Hussey, Christopher, Blayton on Tyne, Tyne and Wear NE21 5GN (GB)
(74) Representative: SBD IPAdmin

(56) References cited:
- WO-A2-2012/114092
- US-A1- 2009 223 540
- US-A1- 2010 319 156
- US-A1- 2014 165 324

## Description

The present invention relates to a steam cleaning device. In particular the present invention relates to a domestic steam cleaning device.

Steam cleaning appliances are used to clean many different surfaces and areas in the domestic environment. Known steam cleaners have different sizes and dimensions for use in different ways.

A steam cleaning device according to the preamble of claim 1 is known e.g. from US-A-20090223540.

One known steam cleaning appliance is a steam mop as shown in EP2494901. The steam mop is comprises a handle and a steam cleaning head suitable for use on a floor for cleaning areas which are required to be steam cleaned such as kitchen or bathroom floors. One problem with this type of steam cleaning appliance is that it is not particularly suitable for cleaning surfaces other than a floor, such as worktops and tiled walls.

Another type of steam cleaning appliance is a steam cleaning appliance as shown in WO11037744. This shows a handheld steam cleaning appliance which comprises a steam generator and a nozzle and a hose connecting the two. Since the nozzle is attached to the hose, a user is able to easily direct steam to worktop surfaces when the trigger is depressed and water is pumped to the steam generator. A problem with the steam cleaning appliance is that the residual water will be in the steam generator when the user releases the trigger. The residual heat of the steam generator is sufficient to continue to generate steam from the residual water. This means that steam will continue to be ejected from the nozzle even after the user has released the trigger.

Embodiments of the present invention aim to address the aforementioned problems.

According to an aspect of the present invention there is a steam cleaning device comprising: a water tank; a boiler in fluid communication with the water tank; a steam outlet in constant fluid communication with the boiler; and a pump for pumping water from the water tank to the boiler; wherein the steam cleaning device comprises a first flow path from the water tank to the boiler via the pump and a second flow path from the boiler to the water tank bypassing the pump; and a valve moveable between a first position for selecting the first flow path and a second position for selecting the second flow path.

Preferably the valve is arranged to select the second flow path when pump and / or boiler are not in operation.

This means that the steam in the boiler can be returned to the water tank when the device is not operation. The steam in the boiler has a second flow pathway out of the boiler and the steam can return to the water tank. This prevents steam from being ejected from the device after the user has stopped using it. By having the steam outlet in constant fluid communication with the boiler the boiler is not pressurised and the boiler remains at atmospheric pressure. This means that the boiler does not have to be strengthened to withstand elevated pressures and complicated seals are not necessary.

Preferably the valve is arranged to select the first flow path when the pump and / or boiler are in operation.

Preferably the valve comprises a fluid port wherein the fluid port is a water outlet for outputting water to the boiler when the valve is in first position and a steam inlet for receiving steam from the boiler when the valve is in the second position. This means that the fluid port of the valve has a dual purpose and less pipes are needed for returning the steam to the water tank.

Preferably the user actuated button or trigger is coupled to the valve with an actuating rod and the actuating rod is arranged to push the valve into the first position when the user actuates the button or trigger. This means that the steam is automatically returned to the water tank when the user releases the trigger.

Preferably the valve comprises a deformable diaphragm moveable between a first position and a second position for respectively selecting the first flow path or the second flow path. Preferably the valve comprises a shoulder portion and the deformable diaphragm is sealable against a shoulder portion. Preferably the deformable diaphragm is sealed against the shoulder when the valve is in the first position. Preferably the valve is biased to the second position.

Preferably the second flow path comprises a tube immersed in the water tank such that steam returning from the boiler flows into the water. Preferably the end of the tube comprises a dissipating element for dispersing the steam into the water in the water tank.

Preferably the steam cleaning device comprises an override mechanism arranged to force the valve into the first position. Preferably the override mechanism comprises an engaging arm for mechanically coupling with the actuating rod. Preferably the override mechanism comprises a recess for receiving an actuating projection for actuating the override mechanism.

In another aspect of the invention there is a steam cleaning apparatus comprising: a steam cleaning device according to the previous aspect; and
a chassis for receiving the steam cleaning device having a floor head arranged to be in fluid communication with the steam output when the steam cleaning device is coupled to the chassis and a projection for actuating the override mechanism.

Various other aspects and further embodiments are also described in the following detailed description and in the attached claims with reference to the accompanying drawings, in which:
Figure 1 shows a side cross sectional view of the steam cleaning device according to one embodiment;
Figure 2 shows a partial cross sectional view of the steam cleaning device according to one embodiment;
Figure 3 shows an exploded perspective view of the valve according to one embodiment;
Figures 4 and 5 show a cross sectional view of the valve in the first and second positions respectively according to one embodiment;
Figures 6 and 7 show schematic diagrams of the steam cleaning device according to one embodiment;
Figure 8 shows a cross sectional view of the steam cleaning device during operation according to one embodiment;
Figure 9 shows a perspective view of a chassis according to one embodiment;
Figure 10 shows a cross sectional side view of the steam cleaning device in the chassis according to an alternative embodiment;
Figure 11 shows a partial cross sectional view of the steam cleaning device according to an alternative embodiment.

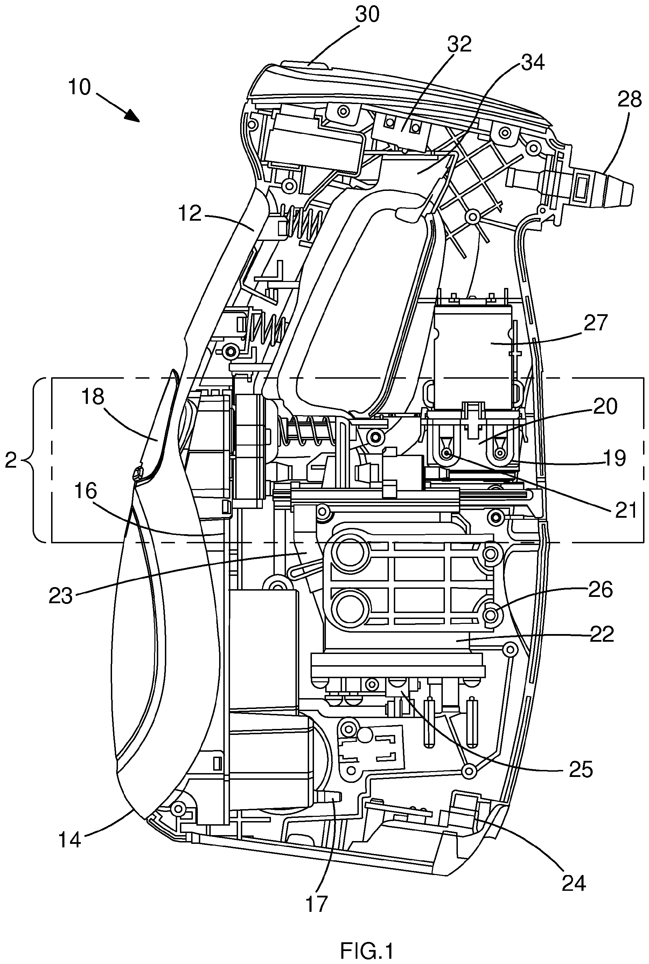

Figure 1 shows a cross sectional view of a steam cleaning device 10. The steam cleaning device is a handheld steam cleaning device and comprises an integral handle 12 for gripping the steam cleaning device during operation and when the steam cleaning device 10 is carried.

The integral handle 12 is formed from the housing 14 which comprises two clamshell halves which are fixed together. The two halves of the housing 14 are typically fastened together with screw fasteners although any suitable fastening means can be used to fix the halves of the housing together. The housing 14 is constructed from a plastics material, but the housing can be made from any suitable material.

The steam cleaning device 10 comprises a clean fluid tank 16 which is mounted within the housing 14. The clean fluid tank 16 is suitable for holding a water reservoir and hereinafter is referred to as a water tank 16. The water tank 16 in other embodiments can be suitable for holding any liquid or mixture of liquids which are converted into a gas for cleaning purposes. The water tank 16 is located towards the rear of the housing 14. The housing 14 has an inherent directionality wherein the handle 12 faces the rear of the housing and towards the user when the steam cleaning device 10 is gripped by the user. The water tank 16 partially protrudes into the space defined by the handle 12. In other embodiments the water tank 16 can be located anywhere inside the steam cleaning device 10.

In other alternative embodiments the steam cleaning device 10 comprises an external water tank (not shown) an external water tank either replaces or is in addition to the internal water tank 16 as shown in Figure 1.

The water tank 16 is replenished with liquid such as water via fill port 18. The fill port 18 is suitable for filling via a tap.

The water tank 16 is in fluid connection with a pump 20. Water is drawn from the water tank 16 via water tank outlet 17. The water tank outlet 17 is located at the bottom of the water tank 16 so that when the steam cleaning device 10 is in an upright position, water in the water tank 16 will be adjacent the water tank outlet 17.

The pump 20 is arranged to pump the water from the water tank to a boiler 22. In some embodiments the pump is a peristaltic pump, but in other embodiments the pump 20 is any suitable means for pumping liquid such as a piston pump etc. The pump 20 is coupled to an electric motor 27 for automatically driving the pump 20. The pump 20 draws water from the water tank outlet 17 into pump water inlet 19. The pump 20 pumps water out via pump water outlet 21.

The boiler 22 is mounted to the housing 14 with a clamp element 26. The boiler 22 receives water from the pump water outlet 21 at boiler water inlet 23. The boiler 22 comprises an electric heating element (not shown) and heats the boiler 22 such that water in the boiler 22 is converted into steam. Steam is outputted from the boiler 22 at boiler steam outlet 25. The boiler 22 and the electric pump 22 are powered by an AC mains electricity supply 24. The cord connecting the steam cleaning device 10 to the mains electricity supply is not shown for the purposes of clarity. In alternative embodiments the steam cleaning device 10 comprises a battery and is powered by a DC electricity supply or the steam cleaning device 10 comprises both DC and AC electricity supplies for powering the steam cleaning device 10.

The steam cleaning device 10 comprises an electrical circuit (not shown) for controlling the operation of the pump 20 and the boiler 22. A power switch 30 turns the electricity supply to the steam cleaning device 10 on or off. A secondary switch 32 is coupled to a manually actuated trigger 34. When the trigger 34 is squeezed, the secondary switch 32 is actuated and electrical power is supplied to the pump 20 and boiler 22.

The boiler steam outlet 25 of the boiler 22 is in fluid communication with a steam nozzle 28. The boiler steam outlet 25 is in constant fluid communication with the steam nozzle 28. This means that the boiler 22 is operable at atmospheric pressure and the generated steam is not pressurised to the extent that a pressure vessel is required. This means the structure and the seals of the steam cleaning device 10 do not need to be heavy duty to withstand a pressurised system. In this way the non-pressurised steam system of the steam cleaning device 10 is simpler and safer to operate.

The steam nozzle 28 is located on a forward facing side of the steam cleaning device 10. The forward facing side of the steam cleaning device is on a side of the steam cleaning device 10 which opposes the handle 12. This means that the steam nozzle 28 faces away from the user when the handle is gripped during operation.

The steam nozzle 28 is suitable for outputting steam directly onto the surface to be cleaned. Additionally or alternatively the steam nozzle 28 comprises a coupling attachment for removeably fixing steam cleaning accessories such as hoses or brushes.

As mentioned above, the various inlets and outlets mentioned in reference to the steam cleaning device 10 for the water tank 16, the electric pump 20 and the boiler 22 are in fluid communication with each other. For the purposes of clarity the connections between the inlets and outlets have not been shown in the Figures. However the connections in some embodiments are hosing or tubing or any other means suitable for providing a water or steam connection between the inlets and outlets.

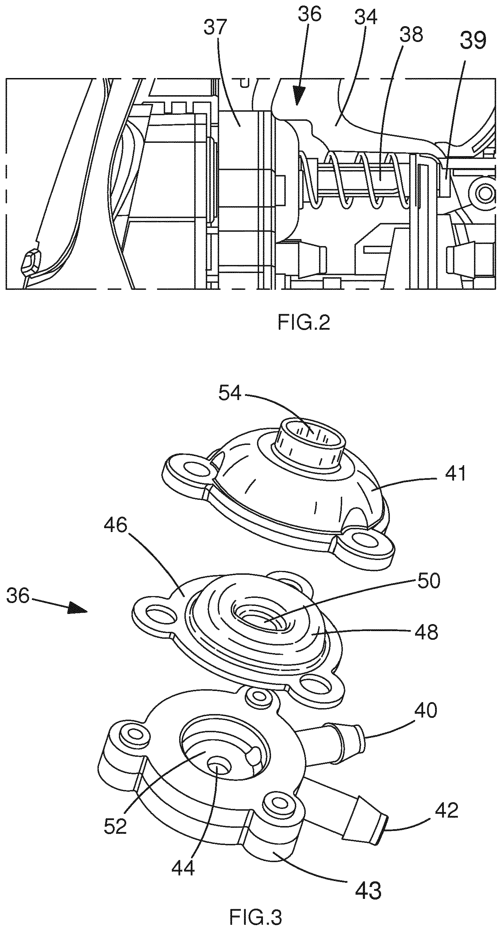

The steam cleaning device 10 will now be discussed in further detail in reference to Figure 2. Figure 2 is a partial side cross section of the steam cleaning device 10 and is a close up of the left hand side of the box labelled 2 in Figure 1.

Figure 2 shows a valve mechanism 36 which is arranged to control water flow and steam flow in the steam cleaning device 10. The valve mechanism 36 comprises a valve body 37 and the valve mechanism 36 is coupled to an actuating rod 38. The actuating rod 38 is coupled to the trigger 34 by a projecting arm portion 39. The projecting arm portion 39 engages with one end of the actuating rod 38 and is moveable in a direction long the longitudinal axis of the actuating rod 38. When the trigger 34 is pulled towards the handle 12, the projecting arm moves towards the valve body 37 and at the same time the actuating rod 38 is pushed into the valve body.

When the actuating rod 38 is pushed in to the valve body 37, the valve changes between a first position and a second position. By changing between the first position and the second position, the valve mechanism 36 selects different flow paths for the water and steam in the steam cleaning device 10.

In alternative embodiments the actuating rod 38 can be replaced with any suitable means for moving and actuating the valve mechanism 36. For example a mechanical linkage, gearing, cam or other mechanical means can replace the actuating rod. In other embodiments the actuating rod can be replaced with an electromechanical mechanism (not shown) for actuating the valve mechanism 36. The electromechanical mechanism is a servo arrangement coupled to the valve mechanism. The trigger is coupled to the secondary switch 32 or another electrical switch for controlling the servo and the valve mechanism.

The valve mechanism 36 will now be discussed in further detail to Figure 3. Figure 3 shows an exploded view of the valve mechanism 36. The valve mechanism 36 comprises an upper valve body 41 and a lower valve body 43. The upper and lower valve bodies 41, 43 are fastened together with screw fastenings. A flexible diaphragm 46 is sandwiched between the upper and lower valve bodies 41, 43. The lower valve body comprises a valve boiler feed port 40 and a valve pump feed port 42. The lower valve body 43 also comprises a valve steam output 44. The valve steam output 44 is in fluid communication with the water tank 16 at the top of the water tank 16. The valve steam output 44 coupled to the water tank 16 at a location remote from the water tank outlet 17. The valve boiler feed port 40 is in fluid communication with the boiler water input 23. The valve pump feed port 42 is in fluid communication with the pump water outlet 21.

The flexible diaphragm 46 comprises an annular raised portion 48 and a central sealing portion 50. The annular raised portion 48 provides rigidity to the flexible diaphragm 46 and this causes the flexible diaphragm to be resiliently flexible and biased to a particular position as shown in Figure 3.

The flexible diaphragm is moveable between a second position and a first position in which the central sealing portion 50 engages and forms a seal against shoulder portion 52 of the lower valve body 43. In the first position the central sealing portion 50 completely covers and blocks the valve steam output 44. This means in the first position only the valve boiler feed port 40 and the valve pump feed port 42 are in fluid communication with each other.

When the flexible diaphragm 46 is in the second position, the central sealing portion 50 does not engage and is free from the shoulder portion 52. In this position the valve boiler feed port 40 and the valve steam output 44 are in fluid communication with each other. In fact the valve pump feed port 42 is also in fluid communication with the valve steam output 44 and the valve boiler feed port 40.

The upper valve body 41 comprise a central hole 54 for receiving the actuating rod 38 or other suitable means for actuating the valve mechanism 36. The end of the actuating rod 38 protrudes through the central hole 54 and engages with the flexible diaphragm 46 on the upper valve body 41 side. The annular raised portion 48 surrounds the end of the actuating rod and ensures that the actuating rod remains central with respect to the central sealing portion 50.

Movement of the actuating rod 38 causes the flexible diaphragm 46 and valve mechanism 36 to moved between the first position and the second position. As mentioned above, the actuating rod 38 is coupled to the trigger 34 and movement of the trigger will actuate the valve mechanism 36. The flexible diaphragm 46 is biased to the second position such that the valve mechanism 36 defaults to a position in which the valve boiler feed port 40 and the valve steam output 44 are in fluid communication with each other.

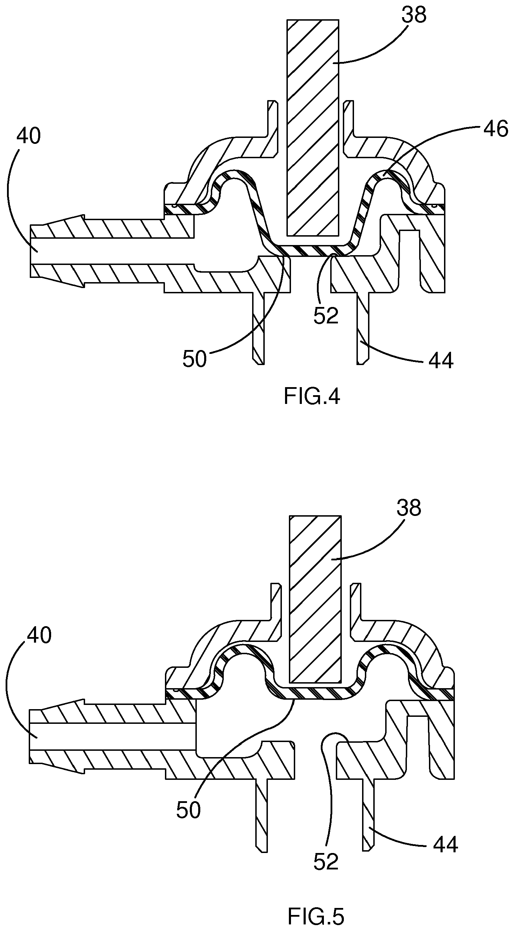

Turning briefly to Figures 4 and 5, the different positions of the valve 36 will now be discussed. Figures 4 and 5 show a cross sectional side view of the valve mechanism in the first position and in the second position respectively.

Figure 4 shows the central sealing portion 50 of the flexible diaphragm 46 engaged with the shoulder portion 52. The diaphragm 46 has been deflected by the actuating rod 38 which protrudes through the central hole 54 and the actuating rod 38 urges the central sealing portion 50 against the shoulder portion 52. As can be seen from Figure 4 the valve steam output 44 is not in fluid communication with the valve boiler feed port 40 or the valve pump feed port 42 (not shown in Figures 4 or 5).

Figure 5 shows the valve mechanism 36 in the second position. The central sealing portion 50 is remote from the shoulder portion 52 and the actuating rod 38 has been retracted away from the shoulder portion 52. The valve steam output 44 is in fluid communication with the valve boiler feed port 40 and the valve pump feed port 42. When the valve mechanism is in the second position, steam from the boiler 22 can return into the water tank 16.

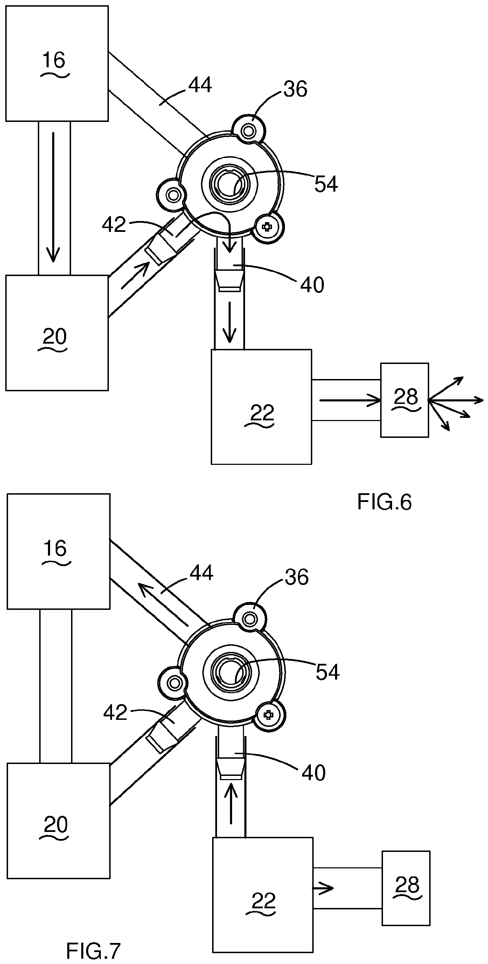

Operation of the steam cleaning device 10 will now be made in reference to Figures 6 and 7 which show schematic representations of the steam cleaning device when the valve mechanism 36 is in the first position and the second position respectively.

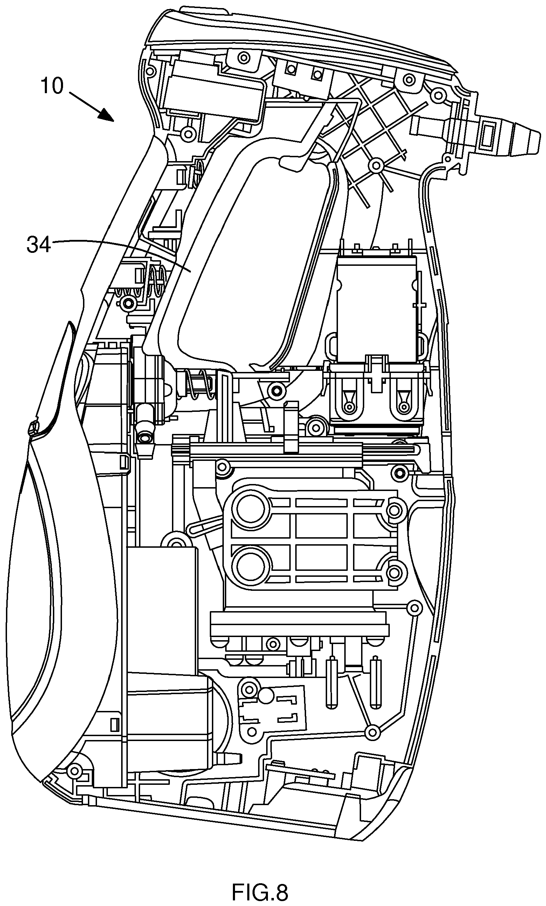

Figure 6 shows the steam cleaning device 10 with the valve mechanism 36 in the first position. When the steam cleaning device is turned on with the power switch 30 and the trigger 34 is depressed, the actuating rod 38 moves the diaphragm 46 in to the first position. Figure 8 shows a cross sectional side view of the steam cleaning device in operation with the trigger 34 depressed. In the first position there is a fluid pathway from the water tank 16 via the pump 20 to the boiler 22. In this way water is pumped through the valve mechanism 36 from the valve pump feed port 42 to the valve boiler feed port 40. Since the trigger 34 is also coupled to secondary switch 32, power is supplied to the pump 20 and the boiler and water is pumped to the boiler 22 which is converted into steam. The steam is then forced out of the spray nozzle 28 by the pressure created when the water is converted into steam and the water being pumped into the boiler 22.

Figure 7 shows the steam cleaning device 10 when the valve mechanism 36 is in the second position. In the second position the actuating rod 38 has been retracted and the flexible diaphragm 46 moves back into the second position due to the spring properties of the annular raised portion 48. The central sealing portion 50 of the diaphragm 46 is not sealing the shoulder portion 52. When the valve mechanism 36 is in the second position, there is a fluid pathway from the boiler 22 to the water tank 16 which bypasses the pump 20. There is no fluid pathway from the boiler 22 via the pump 20 to the water tank 16 because the pump 20 is not operational. This means that the pump 20 in the inoperable state blocks the fluid pathway from the boiler 22 to the water tank 16 which is clear in as shown in Figure 6.

When the user releases the trigger 34, the power is switched off and the pump 20 and the boiler 22 are not operational. However, the boiler 22 will still be hot enough to convert water into steam because the boiler 22 will comprise a certain thermal mass which takes time after the boiler is switched off to cool down. Since the pump 20 is not pumping water into the boiler 22, steam is able to exit the boiler via both the boiler steam outlet 25 and the boiler water inlet 23. In this way, steam exits the boiler 22 via the boiler water inlet 23 and returns to the water tank 16 via the valve mechanism 36. The water tank 16 is in fluid communication with the valve steam output 44.

This means that the valve boiler feed port 40 is a water outlet for outputting water to the boiler 22 when the valve 36 is in first position and a steam inlet for receiving steam from the boiler 22 when the valve 36 is in the second position. In the same way the boiler water inlet 23 receives water from the pump 20 when the valve 36 is in the first position, but steam is outputted from the boiler water inlet 23 when the valve is in the second position. In alternative embodiments, which are not shown, the boiler 22 can comprise an additional valve for allowing the steam to return to the valve 36 and the water tank via an additional flow pathway so that the steam does not need to return by the boiler water inlet 23.

The water tank can comprise a dispersing element which is in fluid communication with the valve steam output 44 via a tube or hosing. The dispersing element is submerged in the water in the water tank 16 which reduces the noise of the steam returning to the water tank. The dispersing element in some embodiments is a sintered metal block or a foamed metal block. The dispersing element can be any steam porous means for dispersing steam in water.

In some embodiments the length of the fluid pathway between the boiler water inlet 23 and the valve steam outlet 44 is shorter than the length of a fluid pathway between the boiler steam output 25 and the steam nozzle 28. This means that is easier for the steam to return to the water tank 16 than exit the steam nozzle. Indeed in some embodiments the length of the fluid pathway between the boiler steam outlet 25 and the valve steam outlet 44 is shorter than the length of a fluid pathway between the boiler steam output 25 and the steam nozzle 28.

In this way very little or no steam exits the steam nozzle 28 and no steam exits the steam nozzle 28 after a short period. For example the inventor has found that within three seconds of shutting of the electrical power to the steam cleaning device that no steam exits the steam nozzle. This prevents the user from accidentally coming into contact with steam after switching off the steam cleaning device.

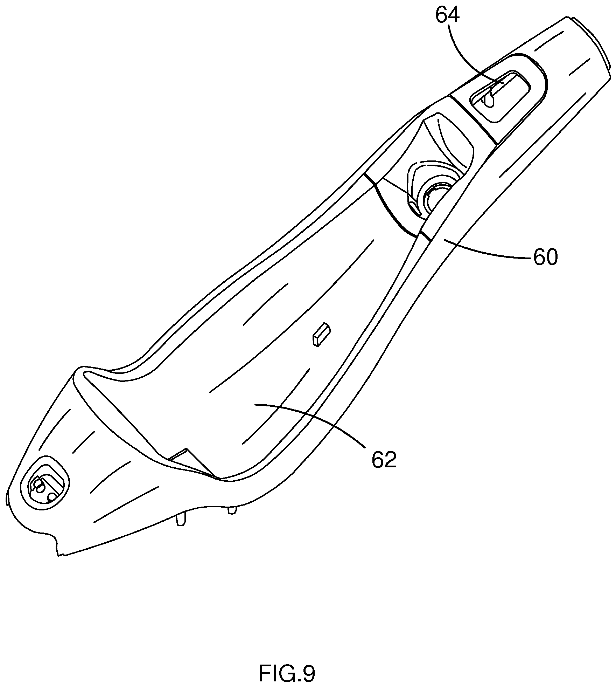

Another embodiment will now be discussed in reference to Figures 9, 10 and 11. The embodiment as shown in Figures 9, 10 and 11 is an optional variation and is not necessary for implementing the invention as previously discussed with respect to earlier embodiments.

The steam cleaning device as shown in Figures 9 to 11 is identical to the steam cleaning device 10 as discussed in reference to the previous embodiments. The same numbering will be used to refer to the same features as in the previous embodiments. The only difference is that there is an override mechanism 70 for forcing the valve 36 into the first position.

Figure 9 shows perspective partial view of a chassis 60 for a steam mop or other steam cleaning apparatus. The chassis 60 comprises a recess 62 and a connection mechanism 64 for coupling the steam cleaning device 10 to the chassis 60. The chassis 60 is arranged to coupled to a steam cleaning head for engaging a floor and to be coupled to a handle. Figure 9 does not show either the cleaning head or the handle of the chassis. The chassis 60 comprises a projection element 66 for overriding the valve mechanism 36 of the steam cleaning device 10.

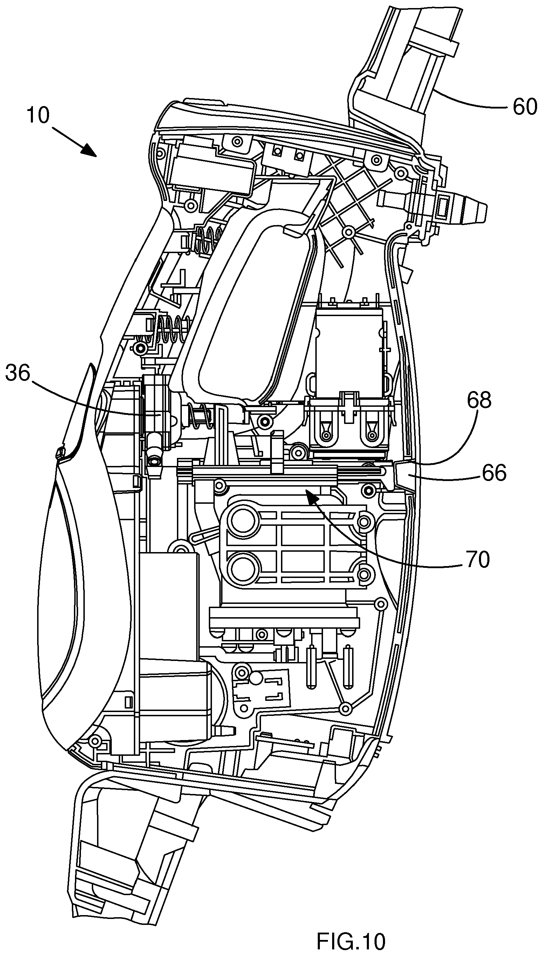

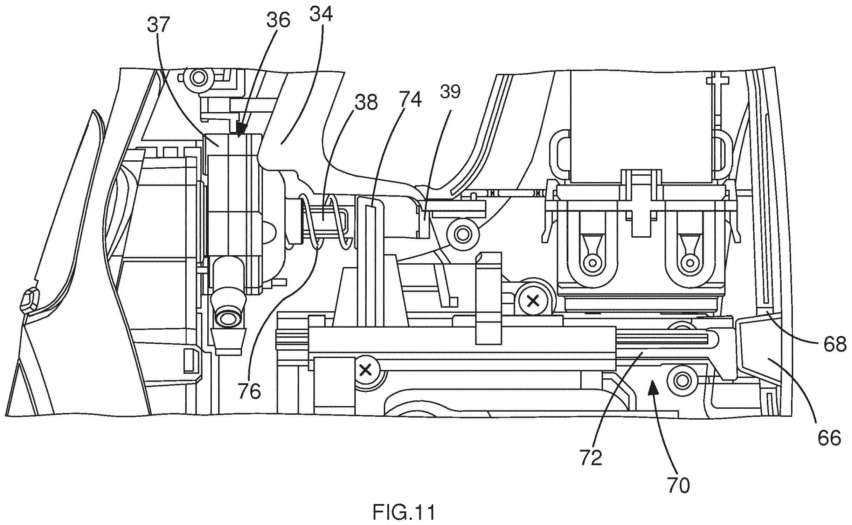

The embodiment will be discussed in further detail in reference to Figures 10 and 11. Figure 10 shows a cross sectional side view of the steam cleaning device 10 coupled to the chassis 60. The projection element 66 protrudes though a recess 68 in the housing 14 of the steam cleaning device 10 to engage with an override mechanism 70.

The override mechanism 70 will now be discussed in further detail in reference to Figure 11. Figure 11 shows a close up cross sectional view of the override mechanism 70. The override mechanism 70 comprises a override rod 72. The override rod 72 is moveable in / inside the steam cleaning device 10. When the steam cleaning device 10 coupled with the chassis 60, the projection element 66 protrudes through the recess 68 and engages with the override rod 72. The projection element 66 pushes the override rod 72 into the steam cleaning device towards the valve mechanism 36. The override rod 72 comprises an engaging arm 74. The engaging arm 74 engages with the actuating rod 38 and the engaging arm 74 pushes the actuating rod 38 into the valve mechanism 36 when the projection element 66 pushes the override rod 72. This is advantageous because the steam is not needed to return to the water tank when the steam cleaning device 10 is coupled to the chassis 60 because the steam output in the cleaning head is remote from the user. This means that the device is quieter when coupled to the chassis 60 because the steam does not pass through the water in the water tank when the user releases a trigger (not shown) on the handle on the chassis.

When engaging arm 74 pushes the actuating rod 38 back, the valve mechanism 36 is set in the first position and the steam cleaning device 10 will operate as discussed in relation to the previous embodiments. The valve mechanism 36 will remain in the first position until the steam cleaning device is removed from the chassis 60. As this point the spring 76 will bias the override rod 72 away from the valve mechanism 36.

When the steam cleaning device 10 is removed from the chassis 60, the steam cleaning device 10 is operable in the same way as mentioned in reference to the previous embodiments. In particular when the trigger 34 is depressed, the projecting arm portion 39 will engage the engaging arm 74 and the actuating rod 38 and both will move towards the valve mechanism 36.

As mentioned above, the override mechanism 70 is optional and is not necessary for example for a standalone steam cleaning device 10 which does not couple with a chassis 60.

In another embodiment two or more embodiments are combined. Features of one embodiment can be combined with features of other embodiments.

Embodiments of the present invention have been discussed with particular reference to the examples illustrated. However it will be appreciated that variations and modifications may be made to the examples described within the scope of the invention.

## Claims

1. A steam cleaning device (10) comprising:
a water tank (16);
a boiler (22) in fluid communication with the water tank (16);
a steam outlet (28) in constant fluid communication with the boiler (22); and
a pump (20) for pumping water from the water tank (16) to the boiler (22);
wherein the steam cleaning device comprises a first flow path from the water tank (16) to the boiler (22) via the pump (20),
**characterised by** a second flow path from the boiler (22) to the water tank (16) bypassing the pump (20); and
a valve (36) moveable between a first position for selecting the first flow path and a second position for selecting the second flow path.

2. A steam cleaning device according to claim 1 wherein the valve (36) is arranged to select the second flow path when pump (20) and / or boiler (22) are not in operation.

3. A steam cleaning device according to claims 1 or 2 wherein the valve (36) is arranged to select the first flow path when the pump (20) and / or boiler (22) are in operation.

4. A steam cleaning device according to any of the preceding claims wherein the valve (36) comprises a fluid port (40) wherein the fluid port is a water outlet for outputting water to the boiler (22) when the valve is in first position and a steam inlet for receiving steam from the boiler when the valve is in the second position.

5. A steam cleaning device according to any of the preceding claims wherein a user actuated button (34) or trigger is coupled to the valve (36) with an actuating rod (38) and the actuating rod (38) is arranged to push the valve (36) into the first position when the user actuates the button or trigger (34).

6. A steam cleaning device according to any of the preceding claims wherein the valve (36) comprises a deformable diaphragm (46) moveable between a first position and a second position for respectively selecting the first flow path or the second flow path.

7. A steam cleaning device according to claim 6 wherein the valve (36) comprises a shoulder portion (52) and the deformable diaphragm (46) is sealable against the shoulder portion (52).

8. A steam cleaning device according to claim 7 wherein the deformable diaphragm (46) is sealed against the shoulder portion (52) when the valve (36) is in the first position.

9. A steam cleaning device according to any of the preceding claims wherein the valve (36) is biased to the second position.

10. A steam cleaning device according to any of the preceding claims wherein the second flow path comprises a tube immersed in the water tank (16) such that steam returning from the boiler (22) flows into the water.

11. A steam cleaning device according to claim 11 wherein the end of the tube comprises a dissipating element for dispersing the steam into the water in the water tank (16).

12. A steam cleaning device according to any of the preceding claims wherein the steam cleaning device comprises an override mechanism (70) arranged to force the valve (36) into the first position.

13. A steam cleaning device according to claim 12 wherein the override mechanism (70) comprises an engaging arm (74) for mechanically coupling with the actuating rod (38).

14. A steam cleaning device according to claims 12 or 13 wherein the override mechanism (70) comprises a recess (68) for receiving an actuating projection (66) for actuating the override mechanism.

15. A steam cleaning apparatus comprising:
a steam cleaning device (10) according to any of claims 12 to 14; and
a chassis (60) for receiving the steam cleaning device having a floor head arranged to be in fluid communication with the steam output when the steam cleaning device is coupled to the chassis and a projection (66) for actuating the override mechanism (70).

## Patentansprüche

1. Dampfreinigungsvorrichtung (10) umfassend:
einen Wassertank (16);
einen Erhitzer (22) in Fluidverbindung mit dem Wassertank (16);
einen Dampfauslass (28) in konstanter Fluidverbindung mit dem Erhitzer (22); und
eine Pumpe (20) zum Pumpen von Wasser von dem Wassertank (16) zu dem Erhitzer (22);
wobei die Dampfreinigungsvorrichtung einen ersten Strömungsweg von dem Wassertank (16) zu dem Erhitzer (22) über die Pumpe (20) umfasst,
**gekennzeichnet durch** einen zweiten Strömungsweg von dem Erhitzer (22) zu dem Wassertank (16) mit Umgehen der Pumpe (20); und
ein Ventil (36), das zwischen einer ersten Position zum Auswählen des ersten Strömungswegs und einer zweiten Position zum Auswählen des zweiten Strömungswegs bewegt werden kann.

2. Dampfreinigungsvorrichtung nach Anspruch 1, wobei das Ventil (36) eingerichtet ist, um den zweiten Strömungsweg auszuwählen, wenn die Pumpe (20) und/oder der Erhitzer (22) nicht in Betrieb sind.

3. Dampfreinigungsvorrichtung nach den Ansprüchen 1 oder 2, wobei das Ventil (36) eingerichtet ist, um den ersten Strömungsweg auszuwählen, wenn die Pumpe (20) und/oder der Erhitzer (22) in Betrieb sind.

4. Dampfreinigungsvorrichtung nach einem der vorherigen Ansprüche, wobei das Ventil (36) einen Flüssigkeitsanschluss (40) umfasst, wobei der Flüssigkeitsanschluss ein Wasserauslass zum Ausgeben von Wasser zu dem Erhitzer (22), wenn sich das Ventil in einer ersten Position befindet, und ein Dampfeinlass zum Aufnehmen von Dampf von dem Erhitzer, wenn sich das Ventil in der zweiten Position befindet, ist.

5. Dampfreinigungsvorrichtung nach einem der vorherigen Ansprüche, wobei ein von einem Benutzer betätigter Knopf (34) oder Auslöser mit dem Ventil (36) mit einer Betätigungsstange (38) verbunden ist und die Betätigungsstange (38) eingerichtet ist, um das Ventil (36) in die erste Position zu schieben, wenn der Benutzer den Knopf oder Auslöser (34) betätigt.

6. Dampfreinigungsvorrichtung nach einem der vorherigen Ansprüche, wobei das Ventil (36) eine verformbare Membran (46) umfasst, die zwischen einer ersten Position und einer zweiten Position zum jeweiligen Auswählen des ersten Strömungswegs oder des zweiten Strömungswegs bewegt werden kann.

7. Dampfreinigungsvorrichtung nach Anspruch 6, wobei das Ventil (36) einen Schulterabschnitt (52) umfasst und die verformbare Membran (46) gegen den Schulterabschnitt (52) abgedichtet werden kann.

8. Dampfreinigungsvorrichtung nach Anspruch 7, wobei die verformbare Membran (46) gegen den Schulterabschnitt (52) abgedichtet ist, wenn sich das Ventil (36) in der ersten Position befindet.

9. Dampfreinigungsvorrichtung nach einem der vorherigen Ansprüche, wobei das Ventil (36) in die zweite Position vorgespannt ist.

10. Dampfreinigungsvorrichtung nach einem der vorherigen Ansprüche, wobei der zweite Strömungsweg ein Rohr umfasst, das derart in den Wassertank (16) eintaucht, dass Dampf, der von dem Erhitzer (22) zurückkehrt, in das Wasser strömt.

11. Dampfreinigungsvorrichtung nach Anspruch 11, wobei das Ende des Rohrs ein Ableitelement zum Ableiten des Dampfs in das Wasser in dem Wassertank (16) umfasst.

12. Dampfreinigungsvorrichtung nach einem der vorherigen Ansprüche, wobei die Dampfreinigungsvorrichtung einen Aufhebungsmechanismus (70) umfasst, der eingerichtet ist, um das Ventil (36) in die erste Position zu zwängen.

13. Dampfreinigungsvorrichtung nach Anspruch 12, wobei der Aufhebungsmechanismus (70) einen Eingriffsarm (74) zum mechanischen Verbinden mit der Betätigungsstange (38) umfasst.

14. Dampfreinigungsvorrichtung nach den Ansprüchen 12 oder 13, wobei der Aufhebungsmechanismus (70) eine Aussparung (68) zum Aufnehmen eines Betätigungsvorsprungs (66) zum Betätigen des Aufhebungsmechanismus umfasst.

15. Dampfreinigungsgerät umfassend:
eine Dampfreinigungsvorrichtung (10) nach einem der Ansprüche 12 bis 14; und
ein Gestell (60) zum Aufnehmen der Dampfreinigungsvorrichtung, das einen Bodenkopf, der eingerichtet ist, um mit dem Dampfauslass in Fluidverbindung zu stehen, wenn die Dampfreinigungsvorrichtung mit dem Gestell verbunden ist, und einen Vorsprung (66) zum Betätigen des Aufhebungsmechanismus (70) aufweist.

## Revendications

1. Dispositif de nettoyage à la vapeur (10) comprenant :
un réservoir d'eau (16) ;
une chaudière (22) en communication fluidique avec le réservoir d'eau (16) ;
une sortie de vapeur (28) en communication fluidique constante avec la chaudière (22) ; et
une pompe (20) pour pomper de l'eau du réservoir d'eau (16) dans la chaudière (22) ;
dans lequel le dispositif de nettoyage à la vapeur comprend un premier trajet d'écoulement du réservoir d'eau (16) à la chaudière (22) via la pompe (20),
**caractérisé par** un second trajet d'écoulement de la chaudière (22) au réservoir d'eau (16) contournant la pompe (20) ; et
une soupape (36) mobile entre une première position pour sélectionner le premier trajet d'écoulement et une seconde position pour sélectionner le second trajet d'écoulement.

2. Dispositif de nettoyage à la vapeur selon la revendication 1, dans lequel la soupape (36) est agencée pour sélectionner le second trajet d'écoulement lorsque la pompe (20) et/ou la chaudière (22) n'est pas ou ne sont pas en service.

3. Dispositif de nettoyage à la vapeur selon les revendications 1 ou 2, dans lequel la soupape (36) est agencée pour sélectionner le premier trajet d'écoulement lorsque la pompe (20) et/ou la chaudière (22) est ou sont en service.

4. Dispositif de nettoyage à la vapeur selon l'une quelconque des revendications précédentes, dans lequel la soupape (36) comprend un orifice de fluide (40), dans lequel l'orifice de fluide est une sortie d'eau pour délivrer de l'eau à la chaudière (22) lorsque la soupape est dans la première position et une entrée de vapeur pour recevoir de la vapeur de la chaudière lorsque la soupape est dans la seconde position.

5. Dispositif de nettoyage à la vapeur selon l'une quelconque des revendications précédentes, dans lequel un bouton (34) ou une détente actionnée par l'utilisateur est couplé(e) à la soupape (36) par une tige d'actionnement (38) et la tige d'actionnement (38) est agencée pour presser la soupape (36) dans la première position lorsque l'utilisateur actionne le bouton ou la détente (34).

6. Dispositif de nettoyage à la vapeur selon l'une quelconque des revendications précédentes, dans lequel la soupape (36) comprend un diaphragme déformable (46) mobile entre une première position et une seconde position pour sélectionner respectivement le premier trajet d'écoulement ou le second trajet d'écoulement.

7. Dispositif de nettoyage à la vapeur selon la revendication 6, dans lequel la soupape (36) comprend une partie d'épaulement (52) et le diaphragme déformable (46) peut être scellé contre la partie d'épaulement (52).

8. Dispositif de nettoyage à la vapeur selon la revendication 7, dans lequel le diaphragme déformable (46) est scellé contre la partie d'épaulement (52) lorsque la soupape (36) est dans la première position.

9. Dispositif de nettoyage à la vapeur selon l'une quelconque des revendications précédentes, dans lequel la soupape (36) est pressée dans la seconde position.

10. Dispositif de nettoyage à la vapeur selon l'une quelconque des revendications précédentes, dans lequel le second trajet d'écoulement comprend un tube immergé dans le réservoir d'eau (16) de sorte que la vapeur revenant de la chaudière (22) s'écoule dans l'eau.

11. Dispositif de nettoyage à la vapeur selon la revendication 11, dans lequel l'extrémité du tube comprend un élément dissipateur pour disperser la vapeur dans l'eau du réservoir d'eau (16).

12. Dispositif de nettoyage à la vapeur selon l'une quelconque des revendications précédentes, dans lequel le dispositif de nettoyage à la vapeur comprend un mécanisme prioritaire (70) agencé pour refouler la soupape (36) dans la première position.

13. Dispositif de nettoyage à la vapeur selon la revendication 12, dans lequel le mécanisme prioritaire (70) comprend un bras d'engagement (74) pour se coupler mécaniquement avec la tige d'actionnement (38).

14. Dispositif de nettoyage à la vapeur selon les revendications 12 ou 13, dans lequel le mécanisme prioritaire (70) comprend un évidement (68) pour recevoir une saillie d'actionnement (66) pour actionner le mécanisme prioritaire.

15. Appareil de nettoyage à la vapeur comprenant :
un dispositif de nettoyage à la vapeur (10) selon l'une quelconque des revendications 12 à 14 ; et
un châssis (60) pour recevoir le dispositif de nettoyage à la vapeur ayant une tête au plancher agencée pour être en communication fluidique avec la sortie de vapeur lorsque le dispositif de nettoyage à la vapeur est couplé au châssis et une saillie (66) pour actionner le mécanisme prioritaire (70).
